# EUROPEAN PATENT APPLICATION

(11) **EP 2 141 397 A1**
(43) Date of publication of application: **06.01.2010**
(21) Application number: 09008253.8
(22) Date of filing: 24.06.2009
(51) Int. Cl.: F16L 3/10

(54) **Fastening device**

(30) Priority: 01.07.2008 DE 102008032247
(71) Applicant: Newfrey LLC, Newark, Delaware 19711 (US)
(72) Inventor: Rosemann, Frank, 35394 Giessen (DE)
(74) Representative: Steil, Christian

(57) **Abstract**

The invention relates to a fastening device (20) for fastening an article (12) extending in a longitudinal direction (13), such as a cable loom, with a base part (22) and a cover part (24), the cover part (24) being connected in an articulated manner to the base part (22) and being movable between an open position and a closing position, the article (12) being surrounded, in the closing position, by the base part (22) and a cover portion (36) of the cover part (24), in order to secure the article (12) to the fastening device (20), and the cover part (24) having a locking tongue (40) which can be introduced into a tongue receptacle (44) of the base part (22) in order to set up the closing position, **characterized in that** the locking tongue (40) is connected in an articulated manner to the cover portion (36).(Fig.1)

## Description

The present invention relates to a fastening device for fastening an article extending in a longitudinal direction, such as a cable loom, with a base part and a cover part, the cover part being connected in an articulated manner to the base part and being movable between an open position and a closing position, the article being surrounded, in the closing position, by the base part and a cover portion of the cover part, in order to secure the article to the fastening device, and the cover part having a locking tongue which can be introduced into a tongue receptacle of the base part in order to set up the closing position.

A fastening device of this type is known, for example, from the document DE 87 03 812 U1.

In the known fastening device, the locking tongue and the tongue receptacle are in each case of generally curved design, in order to facilitate an introduction of the locking tongue into the tongue receptacle when the cover part is pivoted toward the base part.

On the locking tongue and the ton receptacle, latching means are provided, which allow the base part and cover part to be locked in different relative positions, so that articles of different diameter can be received. The latching means are in this case formed radially on the outside of the locking tongue and the tongue receptacle respectively.

Similar fastening devices are known from DE 697 07 913 T2 and from DE 29 32 979 A1.

Against the above background, an object of the invention is to specify an improved fastening device which, in particular, can obstruct, or prevent an inadvertent release of the locking tongue from the tongue receptacle.

In the fastening device mentioned in the introduction, according to the invention, the above object is solved in that the locking tongue is connected in an articulated manner to the cover portion.

What is thereby achieved is that the orientation of the tongue receptacle with respect to an article surrounded by the fastening device can be selected such that the articulated connection between the locking tongue and the cover portion makes it possible that the locking tongue can be introduced more easily. In other words, the cover part can be locked easily to the base part, whereas, on the other hand, the unlocking force is very high. Consequently, this can obstruct or prevent a situation where the locking opens during a mounting or transport of the fastening device, in particular upon contact with other components, etc.

When the fastening device is used for fastening a cable loom of a cable harness in motor vehicles, it is in this case advantageous that the cable harness on which the fastening device is premounted does not have to be handled carefully before the fastening device itself is secured to the vehicle. This is important particularly because cable harnesses of this type, when being mounted, are often pulled transversely through the vehicle.

The object is thus achieved in full.

It is particularly advantageous if the cover part is produced from plastic and if the locking tongue is connected in an articulated manner to the cover portion via a film hinge.

The articulated connection can thereby be produced cost-effectively.

According to a further preferred embodiment, the locking tongue and the tongue receptacle are of straight design.

In contrast to the prior art, in which the locking tongue and the tongue receptacle are of curved design, the straight design of the locking tongue and tongue receptacle makes it possible that substantially higher forces have to be exerted for demounting purposes.

This applies even when the straight tongue receptacle is oriented approximately tangentially with respect to a (usually approximately circular) main receptacle for receiving the article.

In this case, it is advantageous that forces which act in the direction of the open position of the fastening device do not coincide with the unlocking direction which is defined by the orientation of the tongue receptacle.

It is particularly advantageous, however, if the base part and the cover part define, in the closing position, a main receptacle for receiving the article, and if the tongue receptacle extends outwards away from the main receptacle.

This is to be understood, in particular, as meaning that the tongue receptacle extends neither tangentially (in the case of a straight tongue receptacle) nor parallel to the circumference of the main receptacle (as in the prior art discussed above).

Forces which act on the base part or the cover part in the direction of the open position can thereby be converted into forces which act from the locking tongue onto the tongue receptacle in a direction which is transverse to the direction of introduction of the locking tongue. What can thereby be achieved is that the forces required for demounting or unlocking are increased substantially.

It is in this case particularly advantageous if the tongue receptacle extends outwards away from the main receptacle at an angle greater than 10°, in particular greater than 20°.

According to a further preferred embodiment, the locking tongue is oriented transversely with respect to the longitudinal direction. In the fastening device mentioned in the introduction, this particular embodiment, even without the feature of the articulated connection between the locking tongue and cover portion, constitutes a specific invention.

Orientation transversely with respect to the longitudinal direction is in the present context to mean the following. The locking tongue preferably possesses a sheet-like extent, and the plane defined by the sheet-like extent is to be oriented transversely with respect to the longitudinal direction. The main sides of the locking tongue which are defined by the sheet-like extent in this case preferably point in the longitudinal direction.

By virtue of the transverse orientation, the locking and the guide of the locking tongue can be decoupled from one another.

It is particularly advantageous, furthermore, if the tongue receptacle has a latching tab which is designed for engaging on at least one latching tooth of the locking tongue, and if the latching tab is deflectable on the base part about a latching axis which is oriented transversely with respect to the longitudinal direction.

In this embodiment, it is possible to form the at least one latching tooth on a main side, pointing in the longitudinal direction, of the locking tongue.

According to a further preferred embodiment, the locking tongue has a stiffening portion extending in the direction of introduction into the tongue receptacle, the tongue receptacle having at least one guide, on which the stiffening portion is supported, in the state introduced into the tongue receptacle, at least in a direction transverse to the introduction direction and preferably also transversely to the longitudinal direction.

In the fastening device mentioned in the introduction, this embodiment, even without an articulated connection between the locking tongue and cover portion, constitutes a specific invention. Furthermore, this embodiment is expedient particularly when the locking tongue and the tongue receptacle are of straight design and/or when the tongue receptacle extends outwards away from the main receptacle.

In this case, a force, which acts in the direction of the open position of the fastening device and which acts on the locking tongue in the radial and/or tangential direction (with respect to the main receptacle), is absorbed in an ideal way in that the stiffening portion is supported on the guide of the tongue receptacle.

In this case, it is particularly advantageous if the locking tongue has a first main side on which latching means for latching engagement with latching means on the tongue receptacle are formed, and if the stiffening portion is formed on a second main side lying opposite the first main side.

It is thereby possible for the stiffening portion to have a relatively robust design, for example in that the stiffening portion is designed as a rib which with the locking tongue possesses a T-shaped cross section.

Furthermore, it is advantageous, overall, if the base part or the cover part has a fastening portion, by means of which the base part or the cover part can be secured to a component.

In this embodiment, the fastening device can be secured to a component, such as a panel, in order thereby to mount the article, surrounded by the fastening device, on the component.

Fastening devices of this type are placed, for example, on bolts, the fastening portion then having a bolt receptacle which serves for receiving the bolt and which preferably has latching means for latching engagement on the bolt. Bolts of this type are often welded (by what is known as stud welding) to vehicle panels or otherwise joined to them (for example, by adhesive bonding).

According to a further preferred embodiment, the fastening device is formed in one piece.

In this embodiment, the cover part is connected in an articulated manner to the base part, preferably by means of a first film hinge, and the locking tongue of the cover part is preferably connected in an articulated manner to the cover portion via a film hinge. The hinge axes are in this case preferably oriented parallel to the longitudinal direction. The fastening device is in this case preferably produced from plastic, in particular by the injection-moulding method.

It will be appreciated that the features mentioned above and those yet to be explained below can be used not only in the combination specified in each case, but also in other combinations or alone, without departing from the scope of the present invention.

Exemplary embodiments of the invention are illustrated in the drawing and are explained in more detail in the following description. In the drawing:
Fig. 1 shows a diagrammatic sectional view of a fastening arrangement with a fastening device according to one embodiment of the invention in an open position;
Fig. 2 shows part of the fastening device of Fig. 1 in a closing position; and
Fig. 3 shows a perspective front view of a further embodiment of a fastening device according to the present invention in an open position;
Fig. 4 shows a perspective view of the rear side of the fastening device of Fig. 3 in the open position;
Fig. 5 shows a side view of the fastening device of Figures 3 and 4 in a closing position;
Fig. 6 shows a top view of the fastening device of Figures 3 to 5 in the open position; and
Fig. 7 shows a sectional view along the line VII-VII of Fig. 6.

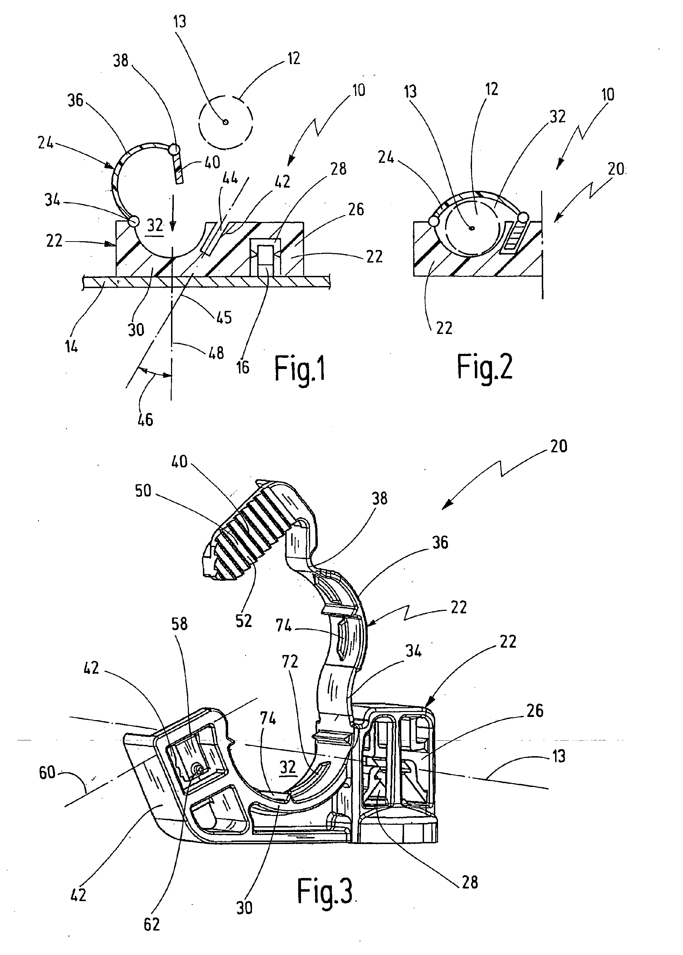

In Fig. 1, a fastening arrangement is designated in general by 10. The fastening arrangement 10 serves for fastening an article 12, such as, for example, a cable loom, extending in a longitudinal direction 13 to a component 14, such as, for example, a body panel of a motor vehicle. The component 14 has in this case secured to it a tie part which, in the present instance, is formed by a bolt 16. The bolt 16 may be joined to a surface of the component 14 in any desired way, for example by stud welding or adhesive bonding.

A fastening device 20 can be mounted on the bolt 16 and is designed for receiving and securing the article 12 and thereby fastening the latter indirectly to the component 14.

The fastening device 20 has a base part 22 and a cover part 24. The base part 22 is produced from plastic and contains a fastening portion 26, by means of which the fastening device 20 can be secured to the component 14. In the present instance, the fastening portion 26 contains a bolt receptacle 28, into which the bolt 16 can be introduced. Furthermore, the fastening portion 26 may have further means for securing the base part 22 to the bolt 16, such as, for example, a nut or latching means, shown in Fig. 1, but not designated in any more detail, by mean of which the base part 22 can be latched onto the bolt 16 (which is, if appropriate, equipped with a thread).

Furthermore, the base part 22 has a receptacle portion 30, arranged, for example, next to the fastening portion 26, for receiving the article 12. The receptacle portion 30 and the cover part 24 form a main receptacle 32 which, in a closing position (see Fig. 2), corresponds approximately to the cross section of the article 12. In the present instance, the receptacle portion 30 is designed with an approximately semicircular cross section.

The cover part 24 is mounted movably on the receptacle portion 30 of the base part 22 by means of a first joint in the form of a hinge 34. More precisely, the cover part 24 has a cover portion 36 which is likewise designed with an approximately semicircular cross section, in order, together with the receptacle portion 30, to form the in the present instance approximately circular main receptacle 32. The illustration of a circular shape is not to be interpreted in a restricted way in the present context. The main receptacle 32 may also be of elliptical or polygonal design.

Furthermore, the cover part 24 has a locking tongue 40 which is connected in an articulated manner to the free end of the cover portion 36 via a second joint in the form of a hinge 38.

The joint or hinge axes of the hinge 34 and of the hinge 38 run parallel to the longitudinal direction 13.

The base part 22 contains, furthermore, a locking portion 42 which, in the present instance, is arranged between the fastening portion 26 and the receptacle portion 30. Alternatively, however, the positions of the locking portion 42 and of the receptacle portion 40 may also be interchanged.

The locking portion 42 has a tongue receptacle 44. The tongue receptacle 44 has locking means, not designated in any more detail in Fig. 1, for locking the locking tongue 40 in the tongue receptacle 44, such as, for example, latching means. The tongue receptacle 44 and the locking tongue 40 are in each case of straight design. The tongue receptacle 44 in this case extends in an introduction direction 45 in which the locking tongue 40 is to be introduced into the tongue receptacle 44.

In this case, the tongue receptacle 44 extends outwards away from the main receptacle 32, in such a way that an angle 46, which is greater than 0°, preferably greater than 10° and particularly preferably greater than 20°, is set up between the introduction direction 45 and a longitudinal plane 48 (which is oriented transversely with respect to the longitudinal direction 13).

In this case, in the present instance, the longitudinal plane 48 is oriented perpendicularly with respect to the plane of the component 14. Furthermore, in the present instance, the longitudinal plane 48 is oriented approximately perpendicularly with respect to a connecting line between the first hinge 34 and the orifice of the tongue receptacle 44.

The locking tongue 40 is guided in the tongue receptacle 44 in introduction direction 45. What is achieved thereby is that forces which act on the cover part 24 in the direction of the open position are introduced into the locking tongue 40 in a direction transverse to the guidance or introduction direction 45. By means of the guide in the tongue receptacle 44, these forces acting essentially transversely with respect to the introduction direction can be effectively absorbed. As a result, the force necessary for tearing the locking tongue 40 out of the tongue receptacle 44 can be increased. In other words, an article 12 held in the fastening device 20 is held securely even when forces act from outside on the cover part 24 or the base part 22 in the direction of the open position.

The fastening device 20 may be produced in one piece from plastic, the joints 34, 38 being designed, for example as film hinges. Alternatively to this, it is also possible to form the base part 22, the cover portion 36 and/or the locking tongue 40 as separate components (consisting of plastic or of another material) and to connect them to one another via suitable joints 34, 38.

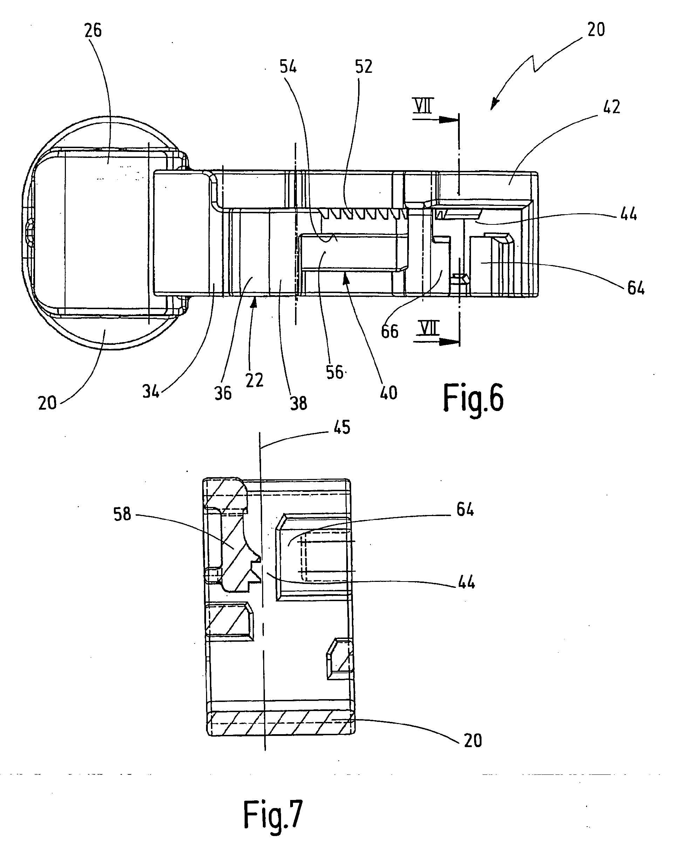

Figures 3 to 7 show a further embodiment of a fastening device 20 according to the invention. The fastening device of Figures 3 to 7 generally corresponds in terms of construction and functioning to the fastening device shown in Figures 1 and 2. Identical elements are therefore given the same reference numerals. Only differences are dealt with below.

In the fastening device 20 of Figures 3 to 7, the receptacle portion 30 is formed between the fastening portion 26 and the locking portion 42.

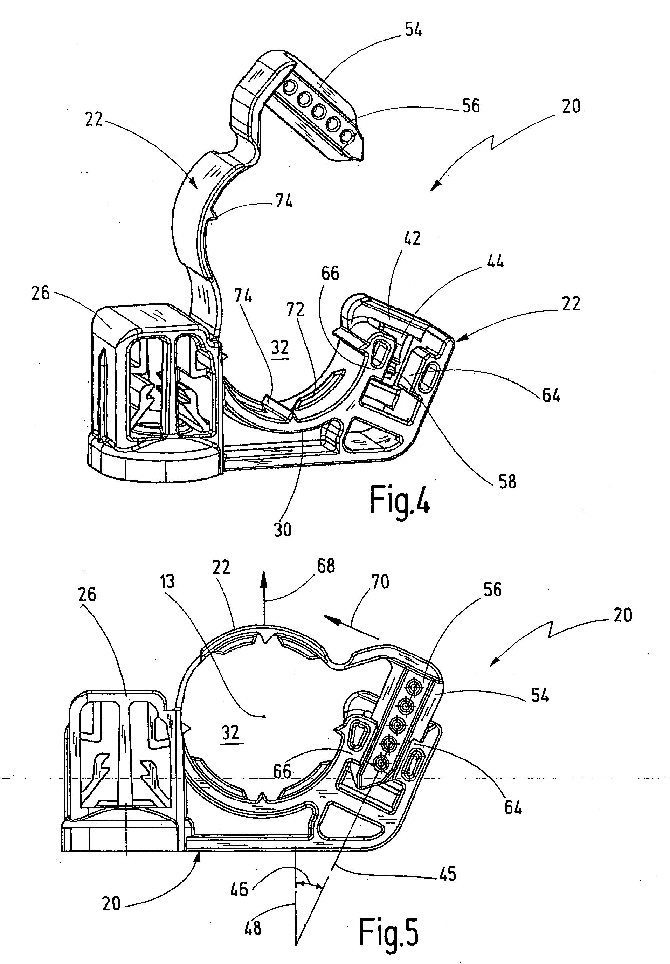

The locking tongue 40 is oriented transversely with respect to the longitudinal direction 13. In other words, the locking tongue 40 has a sheet-like extent, the plane thereby formed being designed to be generally transverse, in particular perpendicular, with respect to the longitudinal direction 13. The locking tongue 40 has a first main side 50 on which latching means 52 having a plurality of latching teeth are formed. As is shown in Fig. 4, the locking tongue 40 has a second opposite main side 54 on which a stiffening portion 56 in the form of a longitudinal rib is formed. The longitudinal rib 56 extends in the longitudinal direction of the tongue and consequently parallel to the introduction direction 45 when the locking tongue 40 is inserted into the tongue receptacle 44 (see also Fig. 5).

On the locking portion 42, a latching tab 58 is formed, which is pivotable about a latching axis 60 which is oriented transversely with respect to the longitudinal direction 13. The latching tab 58 has one or more latching teeth which point in the direction of the tongue receptacle 44 and which are designed to come into engagement with the latching teeth of the latching means 52, in order thereby to lock the locking tongue 40 in the region of the locking portion 42.

The latching tab 58, on its side lying opposite the latching teeth, has a demounting boss 62 which can be gripped, for example, by means of a tool and pulled back opposite to the latching direction, in order to release the lock of the locking tongue 40.

Furthermore, the locking portion 42 has, in the region of the tongue receptacle 44, a first guide 64 and a second guide 66, between which the stiffening rib 56 is guided in introduction direction 45 and held safely against tilting.

The stiffening rib 56, with the locking tongue 40, forms a T-shape in cross section, so that the locking tongue 40 is held securely in the tongue receptacle 44 even in a twisting direction.

The fastening device 20 of Figures 3 to 7 is produced in one piece from plastic, the hinges 34, 38 being designed as film hinges.

Fig. 5 shows the fastening device 20 in the closing state, in which the locking tongue 40 is introduced into the tongue receptacle 44 and its latching means 52 are in engagement with the latching tab 58. In this position, an article 12 (not illustrated in Fig. 5) inserted into the main receptacle 32 is held securely. When a force 68 is exerted, from the closing position shown, on the cover part 22 in the direction of the open position (for example, an externally acting force), a pull 70 is exerted on the locking tongue 40, which pull runs transversely with respect to the introduction direction 45, as illustrated in Fig. 5. The forces thereby introduced into the locking tongue 40 are supported via the stiffening rib 56 on the first guide 64 and the second guide 66 of the locking portion 42. In this case, only very low or even no forces are exerted on the latching connection between the locking tongue 40 and the latching tab 58, and therefore the locking state is preserved, even if very high opening forces 68 occur. The combination of the locking tongue 40 and of the locking portion 42 in this case forms a type of "lock" which cannot be opened (except via the demounting boss 62).

A plurality of radial ribs 72 and a plurality of longitudinal ribs 74 are formed on the inner circumference of the receptacle portion 30 and of the cover portion 36 in order to hold the article 12 securely. It can thereby be ensured that an article 12 received in the fastening device 20 can neither be twisted nor pulled out in the longitudinal direction.

## Claims

1. Fastening device (20) for fastening an article (12) extending in a longitudinal direction (13), such as a cable loom, with a base part (22) and a cover part (24), the cover part (24) being connected in an articulated manner to the base part (22) and being movable between an open position and a closing position, the article (12) being surrounded, in the closing position, by the base part (22) and a cover portion (36) of the cover part (24), in order to secure the article (12) to the fastening device (20), and the cover part (24) having a locking tongue (40) which can be introduced into a tongue receptacle (44) of the base part (22) in order to set up the closing position, **characterized in that** the locking tongue (40) is connected in an articulated manner to the cover portion (36).

2. Fastening device according to Claim 1, the cover part (24) being produced from plastic, and the locking tongue (40) being connected in an articulated manner to the cover portion (36) via a film hinge (34).

3. Fastening device according to Claim 1 or 2, the locking tongue (40) and the tongue receptacle (44) being of straight design.

4. Fastening device according to one of Claims 1 to 3, the base part (22) and the cover part (24) defining, in the closing position, a main receptacle (32) for receiving the article (12), and the tongue receptacle (44) extending outwards away from the main receptacle (32).

5. Fastening device according to Claim 4, the tongue receptacle (44) extending outwards away from the main receptacle (32) at an angle (46) greater than 10°, in particular greater than 20°.

6. Fastening device according to one of Claims 1 to 5 or according to the precharacterizing clause of Claim 1, the locking tongue (40) being oriented transversely with respect to the longitudinal direction (13).

7. Fastening device according to one of Claims 1 to 6, the tongue receptacle (44) having a latching tab (58) which is designed for engaging on at least one latching tooth (52) of the locking tongue (40), and the latching tab (58) being deflectable on the base part (22) about a latching axis (60) which is oriented transversely with respect to the longitudinal direction (13).

8. Fastening device according to one of Claims 1 to 7 or according to the precharacterizing clause of Claim 1, the locking tongue (40) having a stiffening portion (56) extending in the direction (45) of introduction into the tongue receptacle (44), and the tongue receptacle (44) having at least, one guide (64, 66), on which the stiffening portion (56) is supported, in the state introduced into the tongue receptacle (44), at least in a direction transverse to the introduction direction (45).

9. Fastening device according to Claim 8, the locking tongue having a first main side (50) on which latching means (52) for latching engagement with latching means (58) on the tongue receptacle (44) are formed, and the stiffening portion (56) being formed on a second main side (54) lying opposite the first main side (50).

10. Fastening device according to one of Claims 1 to 9, the base part (22) or the cover part (24) having a fastening portion (26), by means of which the base part (22) can be secured to a component (14).

11. Fastening device according to one of Claims 1 to 10, the fastening device (20) being formed in one piece.
